# EUROPEAN PATENT APPLICATION

(11) **EP 4 369 217 A1**
(43) Date of publication of application: **15.05.2024**
(21) Application number: 23195157.5
(22) Date of filing: 04.09.2023
(51) Int. Cl.: G06F 16/51, G05B 23/02

(54) **FAILURE DIAGNOSIS ASSISTING DEVICE**

(30) Priority: 10.11.2022 JP 2022180314
(71) Applicant: Kubota Corporation, Osaka-shi, Osaka 556-8601 (JP)
(72) Inventor: HASHIMOTO, Tahiro, SAKAI-SHI, OSAKA, 5900908 (JP); TAKAO, Naoki, SAKAI-SHI, OSAKA, 5900908 (JP); HASEGAWA, Satoshi, NAGOYA-SHI, AICHI, 4600025 (JP); HAMABATA, Katsushi, NAGOYA-SHI, AICHI, 4600025 (JP); SUGIHARA, Isao, NAGOYA-SHI, AICHI, 4600025 (JP)
(74) Representative: Cabinet Beau de Loménie

(57) **Abstract**

A failure diagnosis assisting device (1) for assisting diagnosis of a failure of a target apparatus includes a display section (3) configured to display a circuit diagram illustrating electric connection between components of the target apparatus; a storage (10) storing circuit diagram information (11) including (i) information for displaying the circuit diagram and (ii) design information (13) incorporated in the information for displaying the circuit diagram; an operation receiver (5) configured to receive an operation of selecting a connection terminal of a connector or a component of the target apparatus on the circuit diagram displayed by the display section (3); and a display controller (7) configured to (i) read from the circuit diagram information (11) in the storage (10) an item of the design information (13) which item is on the selected component or the selected connection terminal and (ii) cause the display section (3) to display a diagnosis assisting diagram indicative of information corresponding to the item of the design information (13).

## Description

### Technical Field

The present invention relates to a failure diagnosis assisting device configured to display a circuit diagram of and design information on a target apparatus to assist diagnosis of a failure of the target apparatus.

### Background Art

Patent Literature 1 discloses displaying a circuit diagram of and design information on a target apparatus for diagnose of a failure of the apparatus. Patent Literature 1 discloses an arrangement of, in response to receiving an input of a component name or the like, obtaining and displaying design information corresponding to the component.

### Citation List

### Patent Literature

Patent Literature 1
Japanese Unexamined Patent Application Publication, Tokukai, No. 2002-315124

### Summary of Invention

### Technical Problem

There has been a demand for a feature that allows a simpler operation to display necessary information for easy and efficient failure diagnosis.

The present invention has an object of providing a failure diagnosis assisting device capable of displaying circuit information and design information easily and efficiently.

### Solution to Problem

To attain the above object, a failure diagnosis assisting device as an embodiment of the present invention is a failure diagnosis assisting device for assisting diagnosis of a failure of a target apparatus, the failure diagnosis assisting device including: a display section configured to display a circuit diagram illustrating electric connection between components of the target apparatus; a storage storing circuit diagram information including (i) information for displaying the circuit diagram and (ii) design information incorporated in the information for displaying the circuit diagram; an operation receiver configured to receive an operation of selecting a connection terminal of a connector or a component of the target apparatus on the circuit diagram displayed by the display section; and a display controller configured to (i) read from the circuit diagram information in the storage an item of the design information which item is on the selected component or the selected connection terminal and (ii) cause the display section to display a diagnosis assisting diagram indicative of information corresponding to the item of the design information.

The circuit diagram information for displaying a circuit diagram includes design information incorporated therein as existing information created when the target apparatus was designed. The display controller, in response to a worker selecting a component or connection terminal on the circuit diagram displayed, reads from the circuit diagram information a diagnosis assisting diagram corresponding to the component or connection terminal selected. This allows the worker to see the diagnosis assisting diagram to diagnose the failure easily and efficiently.

The circuit diagram information including design information incorporated therein eliminates the need for the worker to type in a component name or the like and allows the worker to simply select a component or connection terminal for display of a diagnosis assisting diagram. The above configuration thereby allows a circuit diagram and a diagnosis assisting diagram to be displayed and the worker to diagnose the failure easily and efficiently.

The failure diagnosis assisting device may be configured such that the design information is associated with an element ID assigned to each component and connection terminal, and the display controller reads from the circuit diagram information an item of the design information which item corresponds to the element ID.

The above configuration enables the display controller to read design information from circuit diagram information with use of the element ID of a component or connection terminal selected. This in turn enables the display controller to read design information from circuit diagram information easily and efficiently and cause the display section to display a circuit diagram and a diagnosis assisting diagram easily and efficiently.

The failure diagnosis assisting device may be configured such that the design information includes parts arrangement diagram information on a parts arrangement diagram indicating for each component an arrangement of the component and another component proximate to the component, and the display controller, in response to a component being selected, causes the display section to switch from the circuit diagram to the parts arrangement diagram corresponding to the selected component based on the parts arrangement diagram information.

The above configuration allows the worker to see a parts arrangement diagram to learn about, for example, how a component or connection terminal is actually disposed and how the component or connection terminal is positionally related to another component or connection terminal. This in turn allows the worker to diagnose the failure easily and efficiently.

Since the parts arrangement diagram uses a relatively large display area, the display controller causes the display section to switch from the circuit diagram to the parts arrangement diagram to ensure good visibility of the parts arrangement diagram regardless of the size of the display area of the display section.

The failure diagnosis assisting device may be configured such that the design information includes connector information on a pin arrangement diagram for each connector as the component, and the display controller, in response to a connection terminal being selected, causes the display section to display together with the circuit diagram the pin arrangement diagram for a connector corresponding to the selected connection terminal based on the connector information.

The above configuration allows the worker to see the pin arrangement diagram for a connector as a diagnosis target to diagnose the failure, and thereby clarify the actual position of the connection terminal on the connector with which a wire as a diagnosis target is connected on the circuit diagram. This in turn allows the worker to diagnose the failure easily and efficiently.

A typical connector having a pin arrangement that is not so large allows the display section to display a pin arrangement diagram together with a circuit diagram. This allows the worker to see a circuit diagram and a pin arrangement diagram at the same time to diagnose the failure easily and efficiently.

The failure diagnosis assisting device may be configured such that the display controller causes the display section to highlight the selected connection terminal on the pin arrangement diagram.

The above configuration allows the worker to learn about a selected connection terminal and diagnose the failure easily and efficiently.

The failure diagnosis assisting device may be configured such that the display controller causes the display section to color the selected connection terminal to highlight the selected connection terminal.

The above configuration allows the worker to learn about a selected connection terminal more easily and efficiently.

The failure diagnosis assisting device may be configured such that the failure diagnosis assisting device allows changing a color to add to the selected connection terminal.

The above configuration allows the worker to distinguish and learn about a selected connection terminal easily and efficiently.

The failure diagnosis assisting device may be configured such that the design information includes maintenance procedure information on a maintenance procedure for each component for inspecting a failure of the component, and the display controller, in response to a component being selected, causes the display section to display together with the circuit diagram, or switch from the circuit diagram to, a maintenance procedure manual indicative of a maintenance procedure corresponding to the selected component based on the maintenance procedure information.

The above configuration allows the worker to refer to a maintenance procedure for easy and efficient failure diagnosis.

The failure diagnosis assisting device may be configured such that the design information includes, for each wire as the component, wiring information on a color for the wire, and the display controller, in response to a wire being selected as the component, adds the color corresponding to the selected wire to the selected wire on the circuit diagram based on the wiring information for display of the diagnosis assisting diagram.

The above configuration allows the worker to see on the circuit diagram a wire colored based on wiring information for failure diagnosis. This in turn allows the worker to learn easily about a wire on the circuit diagram and diagnose the failure easily and efficiently.

The failure diagnosis assisting device may be configured such that the display controller, in response to a predetermined operation being performed, color all wires on the circuit diagram based on the wiring information.

The above configuration allows all the wires to be colored. This in turn allows the worker to learn about the connection of a wire on the circuit diagram and diagnose the failure easily and efficiently.

The failure diagnosis assisting device may be configured such that the color for the wire is of a jacket of the wire provided for the target apparatus.

The above configuration allows the worker to learn easily and efficiently about which wire of the target apparatus corresponds to the wire as a diagnosis target on the circuit diagram. This in turn allows the worker to diagnose the failure easily and efficiently.

The failure diagnosis assisting device may be configured such that the color for the wire is predetermined in accordance with a function of the wire.

The above configuration allows the worker to learn about the function of a wire as a diagnosis target for failure diagnosis. This in turn allows the worker to diagnose the failure easily and efficiently.

### Brief Description of Drawings

FIG. 1 is a diagram illustrating an example configuration of a failure diagnosis assisting device.
FIG. 2 is an example circuit diagram.
FIG. 3 is a flow chart of an example failure diagnosis process.
FIG. 4 is an example parts arrangement diagram.
FIG. 5 is an example display of a pin arrangement diagram.
FIG. 6 is an example maintenance procedure manual.
FIG. 7 is a circuit diagram with wires colored as an example.

### Description of Embodiments

Apparatuses and devices such as tractors include various parts (components) such as electronic and mechanical components. When an apparatus or device has failed, a worker diagnoses the failure to determine the failed component, the cause of the failure, and/or the like. The parts and wiring of an apparatus or device are combined in a complicated manner, which makes the failure diagnosis difficult. The worker thus diagnoses the failure with reference to various items of information.

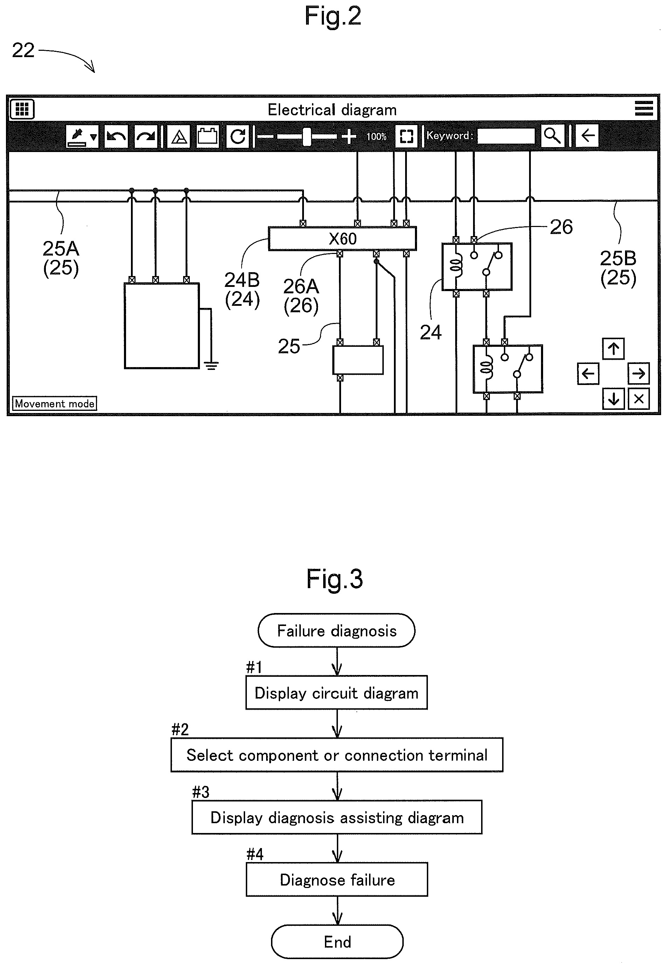

To diagnose a failure, a worker first sees a circuit diagram 22 (see FIG. 2) displayed to illustrate a component suspected as a failed component and its surroundings. The worker then operates the circuit diagram 22 for display of various items of information on components, wiring for electric connection, and/or the like.

The worker diagnoses the failure with reference to the circuit diagram 22 and various items of information displayed as above to determine the failed component, the cause of the failure, and/or the like. The worker, in other words, diagnoses the failure with the assistance of such information.

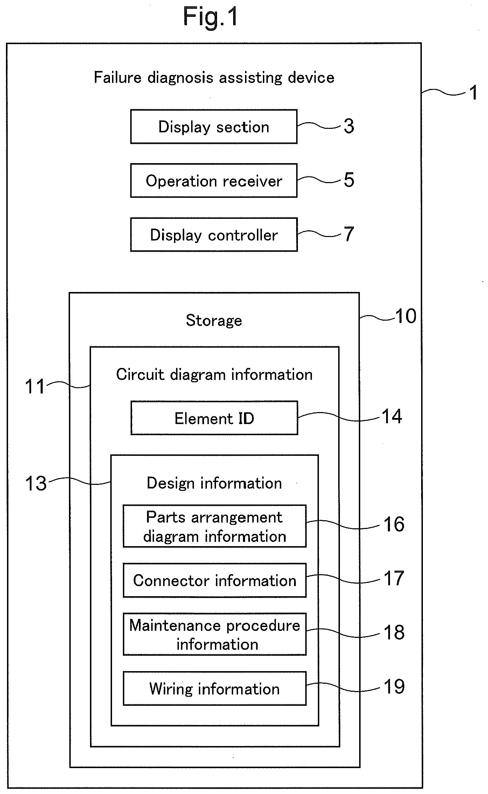

The description below deal with a failure diagnosis assisting device 1 (see FIG. 1) configured to assist failure diagnosis for a tractor as an example apparatus targeted for failure diagnosis.

### Failure Diagnosis Assisting Device

The description below first deals with a failure diagnosis assisting device 1 for the present embodiment with reference to FIGs. 1 and 2.

The failure diagnosis assisting device 1 includes a display section 3, an operation receiver 5, a display controller 7, and a storage 10. The failure diagnosis assisting device 1 includes a processor such as a central processing unit (CPU) configured to control individual functional blocks. The failure diagnosis assisting device 1 may be implemented on a management computer or a tractor, or may be operable with use of a computer, a portable terminal, or the like over a communication line of the internet or the like.

The display section 3 is configured to display a circuit diagram 22 and other information. The operation receiver 5 is configured to receive various operations by a worker, and is capable of receiving a manual operation on a circuit diagram 22 and the like displayed by the display section 3.

The circuit diagram 22 illustrates, for example, different parts (components 24) and electric and/or optionally mechanical connection therebetween. The circuit diagram 22, in other words, illustrates one or more components 24 and/or how the components 24 are electrically connected to one another through wires 25. The circuit diagram 22 also displays connection terminals 26 for the components 24, via which the components 24 are connected to the wires 25.

The storage 10 stores various items of information for displaying the circuit diagram 22 such as circuit diagram information 11, which includes incorporated therein not only information for displaying the circuit diagram 22 but also design information 13 and element IDs 14.

The element IDs 14 are the respective unique identifiers assigned to all the components 24 and connection terminals 26. This means that all the components 24 and connection terminals 26 that may be displayed in the circuit diagram 22 each have its element ID 14 as a unique identifier.

The design information 13 refers to various items of information to be displayed for failure diagnosis, and is existing information generated when the tractor was designed. The design information 13 is incorporated in the circuit diagram information 11 in association (correspondence) with the element IDs 14 such that a single element ID 14 corresponds to a single item of the design information 13.

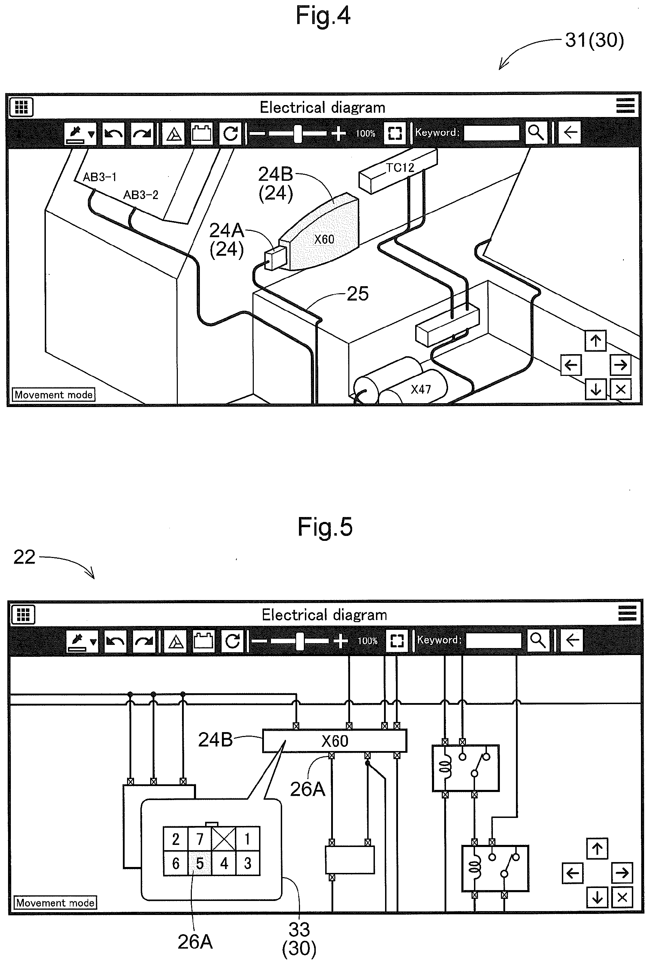

The display controller 7, in response to the operation receiver 5 receiving an operation on (selection of) a component 24 or connection terminal 26 on the circuit diagram 22 displayed on the display section 3, retrieves from the storage 10 an item of the design information 13 which item corresponds to the component 24 or connection terminal 26 operated (selected). More specifically, the display controller 7 reads from the storage 10 the element ID 14 of the component 24 or connection terminal 26 operated (selected), and retrieves from the storage 10 an item of the design information 13 which item is associated with the element ID 14. The display controller 7 then causes the display section 3 to display a diagnosis assisting diagram 30 for assisting failure diagnosis (see FIGs. 4 to 7) that corresponds to the above item of the design information 13.

### Failure Diagnosis Process

The description below deals with a detailed process of the failure diagnosis for the present embodiment with reference to FIGs. 1 to 3.

First, when the tractor has failed, the failure diagnosis assisting device 1 causes the display section 3 to display a circuit diagram 22 illustrating a portion corresponding to the failure. Specifically, in response to receiving information on a failure from a worker, the failure diagnosis assisting device 1 displays a circuit diagram 22 illustrating a portion necessary for failure diagnosis (step #1 in FIG. 3).

The worker, for instance, inputs into the failure diagnosis assisting device 1 a failure code predetermined in accordance with a kind of failure. The worker may type in a failure code with use of a keyboard or the like, or may select a failure code displayed on the display section 3. The operation receiver 5 receives the input of the failure code.

The worker diagnoses the failure while seeing the circuit diagram 22 displayed by the failure diagnosis assisting device 1. The information on the circuit diagram 22 alone will not allow the worker to easily diagnose the failure. The failure diagnosis assisting device 1 thus also displays information other than the circuit diagram 22.

The worker selects on the circuit diagram 22 a component 24 or connection terminal 26 on which the worker wants to obtain detailed information (step #2 in FIG. 3) by, for example, touching or clicking the component 24 or connection terminal 26 on the circuit diagram 22.

The display section 3 displays the circuit diagram 22 in such a manner as to allow the worker to touch or click connection terminals 26 and components 24 including wires 25 . In other words, the circuit diagram information 11 includes information on components 24 and connection terminals 26 configured to be touched or clicked for selection. The worker touches or clicks a component 24 or connection terminal 26 for selection. The operation receiver 5 receives this operation from the worker.

The failure diagnosis assisting device 1 then causes the display section 3 to display a diagnosis assisting diagram 30 (see FIGs. 4 to 7) corresponding to the component 24 or connection terminal 26 selected (step #3 in FIG. 3). Specifically, the display controller 7 reads from the circuit diagram information 11 (i) the element ID 14 corresponding to the component 24 or connection terminal 26 on which the operation receiver 5 has received an operation and subsequently (ii) design information 13 corresponding to the element ID 14 read as above. The display controller 7 then causes the display section 3 to display a diagnosis assisting diagram 30 indicative of information corresponding to the design information 13.

With the display section 3 displaying the circuit diagram 22 and the diagnosis assisting diagram 30, the worker diagnoses the failure (step #4 in FIG. 3). The failure diagnosis assisting device 1 may, in response to the worker newly selecting another component 24 or connection terminal 26, display a diagnosis assisting diagram 30 corresponding to the component 24 or connection terminal 26 newly selected. The display section 3 may display the two diagnosis assisting diagrams 30 together or individually in a switchable manner.

The worker diagnoses the failure by, with reference to the circuit diagram 22 and the diagnosis assisting diagram 30, checking the condition of the component 24 or connection terminal 26, the connection of the wires 25 with the component 24, and/or the like, and/or conducting a predetermined test.

The failure diagnosis assisting device 1, as described above, displays not only a circuit diagram 22 but also a diagnosis assisting diagram 30 corresponding to a failed component 24 or connection terminal 26. This allows a worker to diagnose the failure while seeing various items of information on the component 24 or connection terminal 26 easily and efficiently.

The circuit diagram information 11 including design information 13 incorporated therein allows a worker to simply select a component 24 or connection terminal 26 on a circuit diagram 22 for a desired diagnosis assisting diagram 30 to be displayed. This eliminates the need for the worker to input the name or the like corresponding to the component 24 or connection terminal 26, and allows not only a circuit diagram 22 but also a diagnosis assisting diagram 30 to be displayed and the worker to diagnose the failure easily and efficiently.

Each component 24 and connection terminal 26 is associated with design information 13 based on an element ID 14. This allows a worker to use an element ID 14 to read design information 13 corresponding to the selected component 24 or connection terminal 26 easily and efficiently. This in turn allows a diagnosis assisting diagram 30 to be displayed for easy and efficient failure diagnosis.

### Diagnosis Assisting Diagram

The description below deals with specific examples of the diagnosis assisting diagram 30 with reference to FIGs. 4 to 7 as well as FIGs. 1 to 3.

As illustrated in FIG. 4, the failure diagnosis assisting device 1 is capable of causing the display section 3 to display a parts arrangement diagram 31 as the diagnosis assisting diagram 30, in which case the design information 13 includes parts arrangement diagram information 16.

The parts arrangement diagram 31 illustrates how a component 24 or connection terminal 26 selected is actually assembled to and disposed on the tractor. The parts arrangement diagram 31 illustrates the arrangement of a component 24 or connection terminal 26 selected and other components 24 and connection terminals 26 disposed near the component 24 or connection terminal 26 selected.

In response to the worker selecting a component 24 or connection terminal 26 on the circuit diagram 22, the display controller 7 of the failure diagnosis assisting device 1 reads from the parts arrangement diagram information 16 information corresponding to the component 24 or connection terminal 26 selected, and causes the display section 3 to display a parts arrangement diagram 31 illustrating the component 24 or connection terminal 26 based on the information read as above. The display section 3 may switch its display from the circuit diagram 22 to the parts arrangement diagram 31. The parts arrangement diagram 31 uses a relatively large display area, and may be difficult to display together with the circuit diagram 22. In such a case, the display section 3 switches its display from the circuit diagram 22 to the parts arrangement diagram 31 to ensure good visibility. The display section 3 is preferably configured to also switch back to the circuit diagram 22 in response to a predetermined operation. The display section 3 may display the circuit diagram 22 and the parts arrangement diagram 31 together if the display section 3 is able to ensure visibility of both the circuit diagram 22 and the parts arrangement diagram 31. This allows the worker to see the circuit diagram 22 and the parts arrangement diagram 31 at the same time and diagnose the failure easily and efficiently. FIG. 4 illustrates an example parts arrangement diagram 31 for a case where the worker has selected a component 24B on the circuit diagram 22 in FIG. 2 as an example component 24. FIG. 4 indicates that the components 24 such as the component 24B are each connected with a wire 25 via a connector 24A. The circuit diagram 22 omits the connector 24A and shows only a connection terminal 26 of the connector 24A. The circuit diagram 22 may alternatively show the connector 24A.

The parts arrangement diagram 31 may show the name of a component 24 or connection terminal 26 selected and the name of a nearby component 24 or connection terminal 26. The parts arrangement diagram 31 may highlight the component 24 or connection terminal 26 selected, for instance, color the component 24 or connection terminal 26, while showing or not showing the above names. This allows the worker to learn more easily and efficiently about how the component 24 selected is disposed.

With the above configuration, the worker is able to see the parts arrangement diagram 31 together with the circuit diagram 22 to learn about how the component 24 is actually assembled and disposed, for easy and efficient failure diagnosis.

The parts arrangement diagram information 16 is preferably existing information on (i) the design drawings and/or illustrations created when the tractor was designed, and/or (ii) illustrations created for the parts list in a catalog or product handbook. The design information 13 includes directly incorporated therein information on such illustrations and/or the like as the parts arrangement diagram information 16. This allows the circuit diagram 22 to include directly incorporated therein information on such illustrations and/or the like, and thereby allows the parts arrangement diagram 31 to be displayed easily and efficiently.

As illustrated in FIG. 5, the failure diagnosis assisting device 1 is capable of causing the display section 3 to display a pin arrangement diagram 33 for a connector 24A (see FIG. 4) as the diagnosis assisting diagram 30, in which case the design information 13 includes connector information 17.

The pin arrangement diagram 33 illustrates how a connector 24A corresponding to a connection terminal 26A selected is actually configured on the tractor. The pin arrangement diagram 33 is displayed in response to the worker selecting a connection terminal 26A of a connector 24A, and illustrates the pin arrangement for the connector 24A as a component 24 including the connection terminal 26A selected.

For instance, in response to the worker selecting a connection terminal 26A of a connector 24A on the circuit diagram 22, the display controller 7 of the failure diagnosis assisting device 1 reads from the connector information 17 the pin arrangement diagram 33 for the connector 24A corresponding to the connection terminal 26A selected and causes the display section 3 to display the pin arrangement diagram 33 read as above. The display section 3 preferably highlights, for instance, circle or color that pin of the connector 24A on the pin arrangement diagram 33 which corresponds to the connection terminal 26A selected. The failure diagnosis assisting device 1 may allow the worker to select a color in which the connection terminal 26A selected is to be colored. The pin arrangement diagram 33 uses a relatively small display area. The display section 3 may thus display the pin arrangement diagram 33 together with the circuit diagram 22, or may alternatively switch its display from circuit diagram 22 to the pin arrangement diagram 33.

With the above configuration, the worker is able to see the pin arrangement diagram 33 together with the circuit diagram 22 to learn easily and efficiently about the actual pin arrangement of a connector 24A as a component 24 and that pin of the connector 24A which corresponds to a connection terminal 26A selected. Further, highlighting the above pin allows the worker to learn about how the connector 24A is actually related to the wires 25 for easy and efficient failure diagnosis.

The pin arrangement diagram 33 is preferably an existing pin arrangement diagram created when the tractor was designed. The design information 13 includes directly incorporated therein information on such a pin arrangement diagram 33 as the connector information 17. This allows the circuit diagram 22 to include directly incorporated therein information on a pin arrangement diagram 33, and thereby allows the pin arrangement diagram 33 to be displayed easily and efficiently.

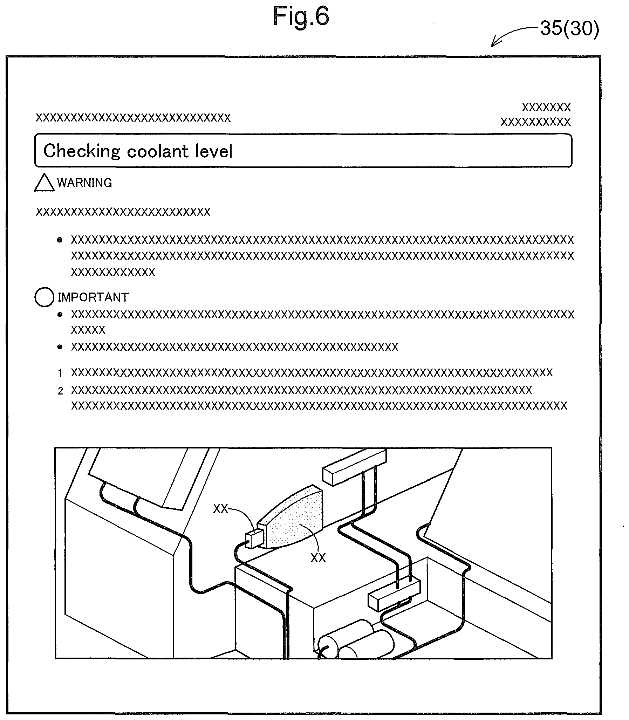

As illustrated in FIG. 6, the failure diagnosis assisting device 1 is capable of causing the display section 3 to display a maintenance procedure manual 35 as the diagnosis assisting diagram 30, in which case the design information 13 includes maintenance procedure information 18.

The maintenance procedure manual 35 indicates procedures for failure inspection such as a procedure for checking whether a component 24 or connection terminal 26 selected has failed or a procedure for determining what failure has occurred. The maintenance procedure manual 35 may also indicate a maintenance procedure for failure prevention.

For instance, in response to the worker selecting a component 24 or connection terminal 26 on the circuit diagram 22, the display controller 7 of the failure diagnosis assisting device 1 reads maintenance procedure information 18 on a maintenance procedure for the component 24 or connection terminal 26 selected and causes the display section 3 to display a maintenance procedure manual 35 indicative of the maintenance procedure for the component 24 or connection terminal 26. The maintenance procedure manual 35 includes text information on such a procedure for failure inspection (maintenance procedure), and may also include information on a diagram, a picture, an illustration, and/or the like to show the maintenance procedure. The display section 3 may switch its display from the circuit diagram 22 to the maintenance procedure manual 35, or may display the maintenance procedure manual 35 together with the circuit diagram 22. FIG. 6 illustrates an example maintenance procedure manual 35 for a case where the worker has selected a component 24B on the circuit diagram 22 in FIG. 2 as an example component 24.

The maintenance procedure manual 35 allows display of a maintenance procedure, to which the worker is able to refer for easy and efficient failure inspection such as checking whether the component 24 or connection terminal 26 selected has failed or determining what failure has occurred. Further, additionally displaying a diagram, a picture, an illustration and/or the like to show the maintenance procedure allows the worker to diagnose the failure more easily and efficiently.

The maintenance procedure manual 35 preferably includes existing maintenance procedures prepared for different tractor models. The design information 13 includes directly incorporated therein information on such a maintenance procedure manual 35 as the maintenance procedure information 18. This allows the circuit diagram 22 to include directly incorporated therein information on a maintenance procedure manual 35, and thereby allows the maintenance procedure manual 35 to be displayed easily and efficiently.

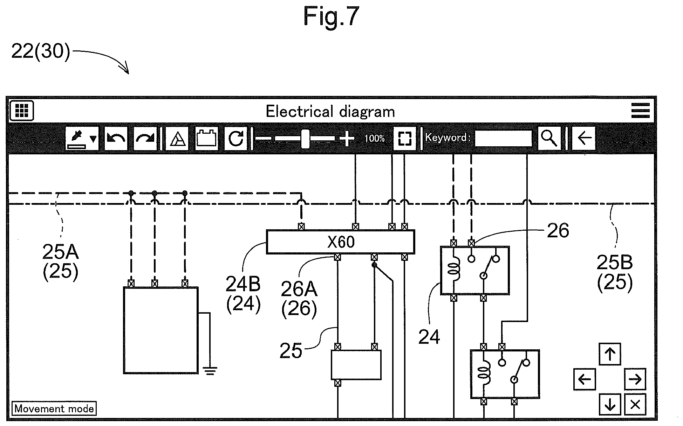

As illustrated in FIG. 7, the failure diagnosis assisting device 1 may be configured to add a predetermined color to a wire 25 on the circuit diagram 22. Such a circuit diagram 22 with a colored wire 25 or that portion of the circuit diagram 22 on which the wire 25 is colored is included in a diagnosis assisting diagram 30, in which case the design information 13 includes wiring information 19. The wiring information 19 includes information on a color for each wire 25.

For instance, in response to the worker selecting a wire 25A as a component 24 on the circuit diagram 22, the display controller 7 of the failure diagnosis assisting device 1 reads from the wiring information 19 on the storage 10 information on the color corresponding to the wire 25A selected and adds the color to the wire 25A on the circuit diagram 22.

The colors to be added to wires 25, that is, the colors for wires 25 indicated by the wiring information 19, may each be the actual color of the jacket of the wire 25 on the tractor or a color predetermined in accordance with the function of the wire 25 on the tractor. The display controller 7 may selectively add either of such colors. Wires 25 differ from one another functionally according to, for instance, whether the wire 25 is a signal line or a power source line.

The failure diagnosis assisting device 1 may be configured to select between the actual color of the jacket and the color corresponding to the function in response to the worker selecting a wire 25 on the circuit diagram 22. For instance, the display controller 7 may be configured to, in response to the worker touching or clicking a wire 25, cause the display section 3 to show a pull-down menu that allows the worker to select between displaying the actual color of the jacket and displaying the color corresponding to the function. Alternatively, the display controller 7 may be configured to, in response to the worker selecting a predetermined wire 25 on the circuit diagram 22 and then performing a predetermined operation such as pressing a separate switch for displaying the actual color of the jacket or a separate switch for displaying the color corresponding to the function, cause the display section 3 to add to the selected wire 25 the actual color of the jacket or the color corresponding to the function. The switch may be a software switch displayed by the display section 3. The failure diagnosis assisting device 1 may be configured to allow the worker to select a plurality of wires 25 to be colored. For instance, as illustrated in FIG. 7, the failure diagnosis assisting device 1 may be configured to, in response to the worker selecting two wires 25A and 25B, color those wires 25A and 25B based on wiring information 19. FIG. 7 shows different kinds of lines to represent different colors. The failure diagnosis assisting device 1 may also be configured to color all the wires 25 on the circuit diagram 22. In other words, the display controller 7 may be configured to, in response to the worker performing a predetermined operation such as pressing a separate switch for displaying the actual color of the jacket or a separate switch for displaying the color corresponding to the function, cause the display section 3 to add to each wire 25 on the circuit diagram 22 the actual color of the jacket or the color corresponding to the function.

Coloring a wire 25 on the circuit diagram 22 allows the worker to learn on the circuit diagram 22 about, for example, the function of the wire 25 and another component with which the wire 25 is connected and diagnose the failure easily and efficiently. Further, adding to a wire 25 selected on the circuit diagram 22 the actual color of the jacket of the wire 25 allows the worker to find on the tractor easily and efficiently the actual wire 25 corresponding to the wire 25 selected on the circuit diagram 22 and easily learn about, for example, the connection of the wire 25 to thereby diagnose the failure easily and efficiently.

The wiring information 19 is preferably existing information created when the tractor was designed. The design information 13 includes such wiring information 19 directly incorporated therein. This allows the circuit diagram 22 to include wiring information 19 directly incorporated therein, and thereby facilitates coloring a wire 25 on the circuit diagram 22 based on information.

### Alternative Embodiments

(1) The embodiment described above may be altered such that the failure diagnosis assisting device 1 is configured to display at least one of the above diagnosis assisting diagrams 30. The failure diagnosis assisting device 1 may, in other words, be configured to perform at least one of displaying the parts arrangement diagram 31, displaying the pin arrangement diagram 33, displaying the maintenance procedure manual 35, and coloring wires 25 on the circuit diagram 22.

The failure diagnosis assisting device 1 may alternatively be configured to, in response to the worker touching or clicking a component 24 or connection terminal 26 for selection, display a pull-down menu for the worker to select one of displaying the parts arrangement diagram 31, displaying the pin arrangement diagram 33, displaying the maintenance procedure manual 35, and coloring wires 25 on the circuit diagram 22. This allows the worker to instruct the failure diagnosis assisting device 1 to display desired information easily and efficiently.

The failure diagnosis assisting device 1 may, for instance, be configured to, in response to the worker touching or clicking a component 24, display a pull-down menu for the worker to select either displaying the parts arrangement diagram 31 or displaying the maintenance procedure manual 35.

(2) The embodiments described above may each be altered to use a method other than the use of the element IDs 14 to identify a component 24 or connection terminal 26 on which the operation receiver 5 has received an operation.

(3) The embodiments described above may each be altered such that the failure diagnosis assisting device 1 does not necessarily include functional blocks such as the above and may include other functional blocks. The functional blocks of the failure diagnosis assisting device 1 may, for instance, each be divided further, or a portion of or the entire functional block may be combined with another functional block. The functions of the failure diagnosis assisting device 1 are not necessarily performed by the above functional blocks, and may each be performed by any functional block. Further, one or more or all of the functions of the failure diagnosis assisting device 1 may be performed by software. Programs as such software are stored in a storage device such as the storage 10 and executed by a processor included in the failure diagnosis assisting device 1 such as a CPU or a separate processor.

Such programs may be stored on an operation terminal such as a computer or a portable terminal. The display section 3 may, in such a case, be in the form of a display screen of such an operation terminal.

(4) The embodiments described above may each be altered such that the display section 3 is in the form of a display screen of an operation terminal such as a computer or a portable terminal for operating the failure diagnosis assisting device 1 over a communication line.

(5) The embodiments described above may each be altered such that the failure diagnosis assisting device 1 is for use to diagnose a failure of not only tractors but also any of various apparatuses such as agricultural work vehicles and machines, for example, combines and rice transplanters, and work vehicles and machines for performing other work.

### Industrial Applicability

The present invention is usable to assist diagnosis of a failure of a target apparatus.

### Reference Signs List

- 1: Failure diagnosis assisting device
- 3: Display section
- 5: Operation receiver
- 7: Display controller
- 10: Storage
- 11: Circuit diagram information
- 13: Design information
- 14: Element ID
- 16: Parts arrangement diagram information
- 17: Connector information
- 18: Maintenance procedure information
- 19: Wiring information
- 22: Circuit diagram
- 24: Component
- 24A: Connector
- 25: Wire
- 26: Connection terminal
- 30: Diagnosis assisting diagram
- 31: Parts arrangement diagram
- 33: Pin arrangement diagram
- 35: Maintenance procedure manual

## Claims

1. A failure diagnosis assisting device (1) for assisting diagnosis of a failure of a target apparatus,
the failure diagnosis assisting device comprising:
a display section (3) configured to display a circuit diagram (22) illustrating electric connection between components (24) of the target apparatus;
a storage (10) storing circuit diagram information (11) including (i) information for displaying the circuit diagram (22) and (ii) design information (13) incorporated in the information for displaying the circuit diagram;
an operation receiver (5) configured to receive an operation of selecting a connection terminal (26) of a connector or a component (24) of the target apparatus on the circuit diagram (22) displayed by the display section; and
a display controller (7) configured to (i) read from the circuit diagram information (11) in the storage (10) an item of the design information (13) which item is on the selected component (24) or the selected connection terminal (26) and (ii) cause the display section (3) to display a diagnosis assisting diagram (30) indicative of information corresponding to the item of the design information (13).

2. The failure diagnosis assisting device according to claim 1, wherein
the design information (13) is associated with an element ID assigned to each component (24) and connection terminal (26), and
the display controller (7) reads from the circuit diagram information an item of the design information which item corresponds to the element ID.

3. The failure diagnosis assisting device according to claim 1 or 2, wherein
the design information (13) includes parts arrangement diagram information (16) on a parts arrangement diagram indicating for each component an arrangement of the component and another component proximate to the component, and
the display controller (7), in response to a component being selected, causes the display section (3) to switch from the circuit diagram to the parts arrangement diagram corresponding to the selected component based on the parts arrangement diagram information.

4. The failure diagnosis assisting device according to any one of claim 1 to 3, wherein
the design information (13) includes connector information on a pin arrangement diagram (33) for each connector as the component, and
the display controller (7), in response to a connection terminal being selected, causes the display section (3) to display together with the circuit diagram the pin arrangement diagram for a connector corresponding to the selected connection terminal based on the connector information.

5. The failure diagnosis assisting device according to claim 4, wherein
the display controller (7) causes the display section (3) to highlight the selected connection terminal on the pin arrangement diagram (33).

6. The failure diagnosis assisting device according to claim 5, wherein
the display controller (7) causes the display section (3) to color the selected connection terminal to highlight the selected connection terminal.

7. The failure diagnosis assisting device according to claim 6, wherein
the failure diagnosis assisting device allows changing a color to add to the selected connection terminal.

8. The failure diagnosis assisting device according to any one of claim 1 to 7, wherein
the design information (13) includes maintenance procedure information (18) on a maintenance procedure for each component (24) for inspecting a failure of the component, and
the display controller (7), in response to a component being selected, causes the display section (3) to display together with the circuit diagram (22), or switch from the circuit diagram to, a maintenance procedure manual indicative of a maintenance procedure corresponding to the selected component based on the maintenance procedure information (18).

9. The failure diagnosis assisting device according to any one of claim 1 to 8, wherein
the design information (13) includes, for each wire as the component (24), wiring information (19) on a color for the wire, and
the display controller (7), in response to a wire being selected as the component, adds the color corresponding to the selected wire to the selected wire on the circuit diagram (22) based on the wiring information for display of the diagnosis assisting diagram.

10. The failure diagnosis assisting device according to claim 9, wherein
the display controller (7), in response to a predetermined operation being performed, color all wires on the circuit diagram based on the wiring information (19).

11. The failure diagnosis assisting device according to claim 9 or 10, wherein
the color for the wire is of a jacket of the wire provided for the target apparatus.

12. The failure diagnosis assisting device according to claim 9 or 10, wherein
the color for the wire is predetermined in accordance with a function of the wire.
